# EUROPÄISCHE PATENTSCHRIFT

(11) **EP 0 320 865 B1**
(45) Veröffentlichungstag und Bekanntmachung des Hinweises auf die Patenterteilung: **29.09.1993**
(21) Anmeldenummer: 88120777.3
(22) Anmeldetag: 13.12.1988
(51) Int. Cl.: C08F 285/00, C08F 2/22

(54) **Verfahren zur Herstellung von wässrigen Polymerdispersionen**
Process for the preparation of aqueous polymer dispersions
Procédé de préparation de dispersions aqueuses de polymères

(30) Priorität: 18.12.1987 DE 3743040
(43) Veröffentlichungstag der Anmeldung: 21.06.1989
(73) Patentinhaber: BASF Aktiengesellschaft, 67063 Ludwigshafen (DE)
(72) Erfinder: Auchter, Gerhard, Dr., D-6800 Mannheim 31 (DE); Neubert, Gerhard, Dr., D-6719 Battenberg (DE)

(56) Entgegenhaltungen:
- EP-A- 0 003 652
- EP-A- 0 110 123
- EP-A- 0 160 285
- US-A- 3 450 796

## Beschreibung

Schon seit langem ist es ein Ziel, als Filmbildner für Beschichtungen wäßrige Polymerdispersionen bereitzustellen, die nach dem Auftrocknen besonders wasserbeständige Filme ergeben.

Das übliche Verfahren zur Herstellung von Polymer-Dispersionen ist die Emulsionspolymerisation, bei der zur Sicherung der Dispersionsstabilität hydrophile Hilfsstoffe (Emulgatoren und/oder Schutzkolloide) eingesetzt werden. Diese Hilfsstoffe bewirken immer eine gewisse Wasserempfindlichkeit der aus den Dispersionen hergestellten Filme.

In der US-PS 4 151 143, der DE-OS 31 23 598 und der DE-OS 36 32 617 sind Emulsions-Polymerisationsverfahren beschrieben, bei denen in wäßrigem Medium als Emulgator bzw. Schutzkolloid anionische, insbesondere carboxylgruppenhaltige Polymere eingesetzt werden, die nach dem Trocknen eine relativ geringe Hydrophilie aufweisen, doch ist die Wasserbeständigkeit der Filme immer noch nicht befriedigend. Zudem müssen die aus diesen Polymer-Dispersionen hergestellten Beschichtungen zur Erzielung brauchbarer Eigenschaften eingebrannt werden, wobei gegebenenfalls ein Vernetzungsmittel mitverwendet wird.

Einen weiteren Weg zur Herstellung von Polymer-Dispersionen, die wasserbeständige Filme ergeben, zeigt die DE-OS 35 43 361, in der Sekundär-Dispersionen beschrieben werden, die aus einem in Wasser unter Zusatz von Ammoniak dispergierten Polymerisat erhältlich sind, das aus zwei Komponenten besteht, von denen die eine Carboxylgruppen enthält. Diese Sekundär-Dispersionen ergeben bereits bei Raumtemperatur ohne Zusatz eines Vernetzungsmittels Filme mit sehr hoher Wasserbeständigkeit. Ein noch verbleibender Nachteil ist jedoch die hohe Thermoplastizität der aus diesen Sekundär-Dispersionen erhältlichen Filme.

Es wurde nun gefunden, daß man wäßrige Polymer-Dispersionen durch radikalische Polymerisation von (a) 50 bis 100 % des gesamten Monomerengewichts C₁-C₂₀-Alkyl(meth)acrylaten, (b) 0 bis 20 % des gesamten Monomerengewichts polyolefinisch ungesättigten Monomeren und (c) 0 bis 30 % des gesamten Monomerengewichts weiteren monoolefinisch ungesättigten Monomeren in wäßriger Emulsion bei Temperaturen von 20 bis 100°C in Gegenwart von vorgebildeten, in Wasser dispergierten Copolymeren, mit Vorteil herstellen kann, wenn man als vorgebildete Copolymere 20 bis 80 Gew.%, bezogen auf die Summe der Gewichte der gesamten Monomeren und der Copolymeren, eines in Wasser dispergierten Gemisches aus 30 bis 90 Gew.% des Gemisches eines in organischen Lösungsmitteln hergestellten Lösungscopolymerisats (A) aus (I) 1,5 bis 15 % seines Gewicht von Monomeren mit 3 bis 10 Kohlenstoffatomen, die eine Carboxyl- oder Carbonsäureanhydridgruppe enthalten, (II) 30 bis 98,5 % seines Gewichts C₁-C₂₀-Alkylacrylaten oder -methacrylaten, (III) 0 bis 60 % seines Gewichts Vinylaromaten, (IV) 0 bis 20 % seines Gewichts monoolefinisch ungesättigten Carbonylverbindungen und (V) 0 bis 20 % seines Gewichts weiteren unter (I) bis (IV) nicht genannten Monomeren und 10 bis 70 Gew.% des Gemischs eines Lösungscopolymerisats (B) aus 40 bis 100 % seines Gewichts an Monomeren (II) und 0 bis 60 % seines Gewichts eines oder mehrere der Monomeren (III) bis (V) einsetzt.

Die erfindungsgemäß hergestellten Dispersionen zeichnen sich besonders durch guten Verlauf, im Verhältnis zur Filmhärte niedrige Mindestfilmbildetemperatur, hohen Glanz, gute mechanische Eigenschaften und vor allem gute Wasserbeständigkeit der aus ihnen hergestellten bei Raumtemperatur getrockneten Filme aus.

Besonders überraschend ist, daß wichtige Dispersionseigenschaften wie Viskosität, Teilchengrößenverteilung, Koagulatfreiheit, Glanz und Verlauf der Filme, bei den erfindungsgemäß hergestellten Dispersionen wesentlich besser reproduziert werden können, als wenn die carboxylgruppenfreie Komponente (B) nicht mitverwendet wird. Die Ursache dafür ist nicht bekannt. Es wird jedoch vermutet, daß diese Vorteile eine Folge der besonders guten Monomerquellbarkeit der Sekundärdispersionen sind, die einen hohen Anteil an hydrophobem Polymerisat enthalten.

Als Monomere (a) eignen sich die Ester der Acrylsäure oder Methacrylsäure mit 1 bis 20 C-Atome enthaltenden geradkettigen oder verzweigten Alkanolen, z.B. Methylacrylat, Methylmethacrylat, Ethylacrylat und -methacrylat, Isopropylacrylat, n-Butylacrylat und -methacrylat, iso-Butylacrylat und -methacrylat, tert.-Butylacrylat, 2-Ethylhexylacrylat und -methacrylat sowie ferner Laurylacrylat und Stearylacrylat. Bevorzugt werden n-Butylacrylat und Methylmethacrylat. Der Anteil an Monomeren (a) an den zu polymerisierenden Monomeren beträgt vorzugsweise 70 bis 90 Gew.%.

Als polyolefinisch ungesättigte Monomere (b) kommen besonders Diacrylate und Dimethacrylate von meist 1 bis 8 C-Atome enthaltenden Alkandiolen, wie Glykoldiacrylat und -dimethacrylat, Butandiol-1,4-diacrylat und -dimethacrylat, Hexandiol-1,6-diacrylat und -dimethacrylat, Octandiol-1,8-diacrylat und -dimethacrylat sowie ferner Divinylbenzol, Diallylphthalat, Butadien und Trimethylolpropantriacrylat oder -trimethacrylat sowie Pentaerythrittri- oder tetraacrylat in Frage. Vorzugsweise werden von den Monomeren (b) 5 bis 15 Gew.%, bezogen auf die gesamten zu polymerisierenden Monomeren eingesetzt.

Als Monomere (c) kommen z.B. Monoacrylate und Monomethacrylate von meist 1 bis 8 C-Atome enthaltenden Alkandiolen, wie β-Hydroxyethyl-acrylat und -methacrylat, 2-Hydroxypropyl-acrylat und -methacrylat und Butandiol-1,4-mono-acrylat und -methacrylat, Acrylnitril und Methacrylnitril, Acrylamid, Methacrylamid, Vinylester, wie Vinylacetat, Vinylpropionat und Vinyllaurat, Vinylether, wie Vinylisobutylether sowie Diester von monoolefinisch ungesättigten Dicarbonsäuren, wie Maleinsäure, Itakonsäure, Citraconsäure oder Mesaconsäure mit gegebenenfalls Ether- oder Thioether-Gruppen enthaltenden Alkanolen mit 1 bis 20 C-Atomen sowie ferner auch Monoolefine mit 3 bis 10 C-Atomen, wie Propen, Buten, Hexen und Penten, Isobuten, außerdem auch Vinylaromaten in Frage. Als Monomere (c) können darüber hinaus auch die Monomeren IV) Verwendung finden.

Die in Wasser dispergierten Lösungscopolymerisate (A) und (B) können nach den Angaben der DE-OS 3 543 361 hergestellt sein. Im einzelnen wird hierzu noch folgendes ausgeführt:

Als Komponente (I) kommen copolymerisierbare olefinisch ungesättigte 3 bis 10 Kohlenstoffatome enthaltende organische Verbindungen mit mindestens einer Carboxyl- oder Carbonsäureanhydridgruppe in Frage, wie Acrylsäure, Methacrylsäure, Crotonsäure, Maleinsäure, Itaconsäure bzw. die Anhydride oder Halbester der Dicarbonsäuren. Die Anhydridgruppen der Copolymerisate können vor dem Neutralisieren mit Ammoniak, beispielsweise durch Erwärmen mit 1 bis 8 Kohlenstoffatome enthaltenden Alkanolen oder Glykolethern in die entsprechenden Halbestergruppen überführt werden. Beispiele für solche Alkanole bzw. Glykolether sind Ethanol, Isopropanol, Butanol und Butylglykol. Bevorzugte Komponenten (I) sind Acrylsäure, Methacrylsäure und Itaconsäure. Komponente (I) ist im Copolymerisat (A) in Mengen von 1,5 bis 15, vorzugsweise von 5 bis 12 Gew.% einpolymerisiert.

Als Ester der Acrylsäure oder Methacrylsäure (II) mit 1 bis 20 Kohlenstoffatome enthaltenden geradkettigen oder verzweigten Alkanolen eignen sich z.B. Methylacrylat und -methacrylat, Ethylacrylat, Isopropylacrylat, n-Butylacrylat, n-Butylmethacrylat, Isobutylacrylat Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat und Methylmethacrylat. Komponente (II) ist im Copolymerisat (A) zu 30 bis 98,5 Gew.%, bevorzugt von 45 bis 95 Gew.% enthalten.

Als Komponente (III) können Vinylaromaten mit 8 bis 12 Kohlenstoffatomen wie Styrol, α-Methylstyrol, Vinyltoluole und t-Butylstyrol sowie ferner Halogenstyrole eingesetzt werden. Bevorzugt ist Styrol. Komponente (III) kann im Coolymerisat (A) bis zu 60 Gew.% mitverwendet werden. Für den Fall der Mitverwendung haben sich 20 bis 45 Gew.% bewährt.

Geeignete monoolefinisch ungesättigte Carbonylverbindungen (IV) sind z.B. α,β-monoolefinisch ungesättigte Aldehyde und/oder Ketone wie Acrolein, Methacrolein, Vinylalkylketone mit 1 bis 20 Kohlenstoffatomen im Alkylrest, Formylstyrol, (Meth)acryloxyalkanale und -alkanone, deren Herstellung z.B. in der DE-OS 27 22 097 beschrieben ist, N-Oxoalkyl(methacrylamid), wie sie u.a. in der US-PS 4 226 007, der DE-OS 20 61 213 und der DE-OS 22 07 309 beschrieben sind, z.B. N-3-Oxobutyl-acrylamid und -methacrylamid, N-(1,1-Dimethyl-3-oxobutyl(meth)acrylamid, Diaceton(meth)acrylamid, sowie N-3-Oxo-1,1-dibutyl-2-propyl-hexylacrylamid, ferner Acetonyl- und Diaceton(meth)acrylat, Acrylamidopivalinaldehyd und Gemische dieser Comonomeren. Bevorzugt werden 3-Oxoalkyl(meth)acrylate und N-3-Oxoalkyl(meth)acrylamide. Komponente (IV) kann im Copolymerisat (A) zu bis zu 20 Gew.% enthalten sein. Im Fall der Mitverwendung ist eine Menge von 2 bis 15 Gew.% bevorzugt.

Bei der Komponente (V) handelt es sich um weitere, unter (I) bis (IV) nicht genannte, olefinisch ungesättigte Monomere, wie beispielsweise Mono(meth)acrylate von Alkandiolen, wie Hydroxyethyl- und Hydroxypropyl(meth)acrylat sowie Butandiolmono(meth)acrylat, (Meth)acrylamid und/oder (Meth)acrylnitril. Diese Monomere können, falls erforderlich, zur Einstellung spezieller Eigenschaften dienen. Als Komponente (V) können auch Vinylether, Vinylester, wie Vinylacetat und Vinylpropionat, Diester der Maleinsäure, Itaconsäure, Citraconsäure oder Mesaconsäure mit gegebenenfalls Ether- oder Thioether-Gruppen enthaltenden Alkanolen mit 1 bis 20 Kohlenstoffatomen sowie ferner Monoolefine mit 3 bis 10 Kohlenstoffatomen, wie Propen, Buten, Isobuten, Penten, Hexen und Diolefine wie, Butadien und Isopren mitverwendet sein.

Das Copolymerisat (B) enthält keine Monomeren (I) einpolymerisiert. Die Monomeren (II) sind im Copolymerisat (B) zu 40 bis 100 Gew.%, bevorzugt zu 45 bis 98 Gew.% einpolymerisiert. Die für Copolymerisat (A) weiter genannten Monomeren (III) bis (V) sind zu 0 bis 60, im Falle der Mitverwendung bevorzugt zu 2 bis 55 Gew.% im Copolymerisat (B) einpolymerisiert. Bevorzugt hiervon 2 bis 15 Gew.% der Komponente (IV).

Die Copolymerisate (A) und (B) werden durch Polymerisation in organischer Lösung hergestellt. Das Verfahren der Lösungspolymerisation ist dem Fachmann grundsätzlich bekannt, so daß auf die geeigneten Bedingungen hier nicht näher eingegangen zu werden braucht. Die Lösungspolymerisation kann z.B. in Gegenwart von 0,3 bis 5, vorzugsweise 0,5 bis 3 Gew.%, bezogen auf die Summe der Monomeren, radikalbildender Initiatoren, wie Azobiscarbonsäureamiden, Azobiscarbonsäurenitrilen oder Peroxiden im allgemeinen bei Temperaturen von 50 bis 150°C, vorzugsweise von 80 bis 130°C gegebenenfalls in Gegenwart von 0 bis 3 Gew.%, bezogen auf die Summe der Monomeren an Reglern erfolgt sein, wie Mercaptoethanol, tert.-Dodecylmercaptan oder Diisopropylxanthogendisulfid. Als organische Lösungsmittel kommen grundsätzlich alle gebräuchlichen Lösemittel, die das erfindungsgemäße Copolymerisat lösen, in Betracht. Bevorzugt sind Butanol, Isobutanol, Propanol, Ethanol und Toluol und Gemische hieraus.

Es ist an sich nicht von Bedeutung, ob zuerst das Copolymerisat (A) und dann das Copolymerisat (B) hergestellt oder ob umgekehrt vorgegangen wurde. Für eine bevorzugte Ausführungsform der Erfindung wird jedoch zunächst das Copolymerisat (A) und anschließend das Copolymerisat (B) hergestellt. Beide Komponenten ergeben eine homogene Mischung. Dispersionen, die aus zwei getrennt hergestellten und dann gemischten Copolymerisaten (A) und (B) hergestellt sind, weisen im allgemeinen ungünstigere anwendungstechnische Eigenschaften auf, z.B. geringere Stabilität und ungünstigeres Fließverhalten. Zudem würde das Mischen einen zusätzlichen Arbeitsgang erfordern.

Der Anteil der Komponente A, bezogen auf die Gesamtmenge der Lösungscopolymerisate A und B, beträgt 30 - 90, vorzugsweise 40 - 85, besonders bevorzugt 50 - 75 Gew.%.

Die Lösungen der auspolymerisierten Copolymerisate (A) und (B) werden entweder durch Zumischen von Ammoniak und Verdünnen mit Wasser in wäßrige Dispersionen überführt, oder man rührt die auspolymerisierte Copolymerisatlösung langsam in eine wäßrige Ammoniaklösung ein und erhält dadurch eine Dispersion. Aus den so erhaltenen Dispersionen wird das organische Lösungsmittel abdestilliert, wobei das Lösemittel zurückgewonnen werden kann. Das erhaltene in Wasser dispergierte Gemisch der Lösungscopolymerisate (A) und (B) enthält im allgemeinen weniger als 2, vorzugsweise weniger als 1 % seines Gewichts an organischen Lösungsmitteln der oben genannten Art.

Der Neutralisationsgrad des Lösungspolymerisat (A + B)-Gemisches beträgt meist 10 bis 150 %, vorzugsweise 15 bis 100 %, insbesondere 40 bis 70 %. Der pH-Wert des in Wasser dispergierten Gemisches der Copolymerisate (A) und (B) beträgt oft 6,8 bis 10, vorzugsweise 7 bis 9. Von dem als Neutralisationsmittel dienenden Ammoniak kann, zur Erzielung bestimmter Effekte, ein geringer Teil, zweckmäßig nicht mehr als 25 Mol.%, vorzugsweise nicht mehr als 10 Mol.% des für die Neutralisation erforderlichen Ammoniaks durch organische Amine, insbesondere Triethylamin, ersetzt sein. Solche Zusätze können die Wasserfestigkeit der Dispersionsfilme beeinträchtigen.

Bei der praktischen Durchführung des erfindungsgemäßen Verfahrens werden die Monomeren (a), (b) und (c) im allgemeinen der wäßrigen Dispersion der Copolymerisate (A) und (B), einen Polymerisationsinitiator enthält, auf einmal oder nach und nach zugeführt, und bei erhöhter Temperatur, zweckmäßig bei 50 bis 90°C polymerisiert. Man kann aber auch die Mischung aus der wäßrigen Dispersion der Copolymerisate (A) und (B), den Monomeren (a) bis (c), dem Polymerisationsinitiator und dem wasserlöslichen Salz, dem Polymerisationsgefäß nach und nach während der Polymerisation zudosieren. Der Anteil der vorgebildeten Copolymeren A und B, bezogen auf die Summe der Gewichte der gesamten Monomeren und der Copolymeren, beträgt 20 - 80, vorzugsweise 30 - 70, besonders bevorzugt 45 - 60 Gew.%.

Als Polymerisationsinitiatoren kommen alle üblichen radikalbildenden Initiatoren in Frage. Bevorzugt sind im wesentlichen wasserunlösliche Initiatoren, insbesondere organische Peroxide, wie besonders tert.-Butyl-per-2-ethylhexanoat und tert.-Butyl-perpivalat. Die Verwendung von Initiatoren, die beim Zerfall hydrophile Gruppen bilden, die ins Polymer eingebaut werden, wirkt sich nachteilig auf die Wasserbeständigkeit der aus den erfindungsgemäßen Dispersionen erhältlichen Filme aus und ist daher im allgemeinen nicht zweckmäßig.

Bei dem neuen Verfahren werden dem wäßrigen Medium des Polymerisations-Ansatzes mit Vorteil, insbesondere vor Zugabe der Monomeren (a) bis (c), meist 0,5 bis 5 Gew.%, vorzugsweise 1 bis 2 Gew.%, bezogen auf das Gewicht der Lösungscopolymerisate (A) und (B), wasserlösliche Salze zugesetzt. Der Elektrolytzusatz erniedrigt die Viskosität der Mischung und die der fertigen Dispersion und erlaubt so die Herstellung von Dispersionen mit verhältnismäßig hohen Polymergehalten. Außerdem wird durch den Elektrolytzusatz überraschenderweise der Polymerisationsumsatz und der Verlauf der aus den Filmen hergestellten Filme verbessert.

Als wasserlösliche Salze kommen eine Vielzahl anorganischer und organischer Salze in Betracht. Bevorzugt sind die Ammoniumsalze von Carbonsäuren und Kohlendioxid. Beispiele für derartige Salze sind Ammonium-, Natrium- und Kalium-chlorid, -sulfat, -acetat, -benzoat und -carbonat bzw. -hydrogencarbonat.

Da das in Wasser dispergierte Gemisch der Lösungs-Coppolymerisate (A) und (B) bereits Ammoniak enthält, kann auch einfach die Carbonsäure oder Kohlendioxid gegebenenfalls zusammen mit zusätzlichem Ammoniak zu der wäßrigen Dispersion der Copolymerisate (A) und (B) zugegeben werden. Besonders bevorzugt ist die Zugabe von Benzoesäure.

Wenn die Lösungscopolymerisate (A) und (B) Monomere (IV) einpolymerisiert enthalten, ist eine Vernetzung der aus den Dispersionen hergestellten Filme mit Polyhydraziden von Vorteil. Der Zusatz von Polyhydraziden zu den erfindungsgemäßen Dispersionen ist nur in diesem Fall sinnvoll. Geeignete Polyhydrazide sind z.B. Dihydrazide organischer Di- oder Oligocarbonsäuren. Als Beispiele seien genannt Malonsäure-, Bernsteinsäure-, Glutarsäure-, Adipinsäure-, Pivalinsäure-, Korksäure-, Azelainsäure-, Sebacinsäure- und Decandisäure-, Dodecandisäure-, Tridecandisäure-, Tetradecandisäure-, Pentadecandisäure-, Hexadecandisäure-, 2-Methyl-tetradecandisäure-dihydrazid, ferner Methyl-, Ethyl-, Propyl-, Butyl-, Hexyl-, Heptyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octylbernsteinsäuredihydrazid, 2-Ethyl-3-propyl-bernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäure- und Benzylmalonsäuredihydrazid, Pentan-1,3,5-tricarbonsäuretrihyrazid, Hex-4-en-1,2,6-Tricarbonsäuretrihydrazid, 3-Cyan-pentan-1,3,5-tricarbonsäuretrihydrazid, Dicyanfumarsäuredihydrazid, ferner die Di- bzw. Oligohydrazide von dimerisierten bzw. oligomerisierten ungesättigten Fettsäuren. Bevorzugt ist Adipinsäuredihydrazid.

Das Polyhdrazid kann den erfindungsgemäß hergestellten Polymer-Dispersionen zweckmäig in fester Form oder als wäßrige Lösung oder Aufschlämmung hinzugefügt und eingerührt werden, und wird, bevorzugt in einer Menge von 0,1 bis 1 Äquivalent Polyhydrazid pro Äquivalent in der Dispersion enthaltener Carbonylgruppen eingesetzt.

Die Verarbeitung der erfindungsgemäß hergestellten wäßrigen Polymer-Dispersionen kann mit den üblichen Auftragsaggregaten erfolgen, die Viskosität kann durch Verdicken mit handelsüblichen Verdickern oder Verdünnen mit Wasser an das jeweilige Auftragssystem angepaßt werden.

Die erfindungsgemäßen Dispersionen eignen sich zur Herstellung von Beschichtungen schützender und/oder dekorativer Art auf harten und weichen Substraten, z.B. Metall, Leder, Papier und/oder Kunststoffen.

Die in den folgenden Beispielen angegebenen Teile und Prozente beziehen sich auf das Gewicht. Die darin angegebenen Lichtdurchlässigkeits-Werte (LD-Werte) gelten für 2,5 cm dicke Schichten der auf einen Feststoffgehalt von 0,01 Gew.% verdünnten Dispersionen bei Raumtemperatur.

### Beispiel 1

Herstellung des in Wasser dispergierten Gemisches der Lösungs-Copolymerisate (A) und (B):

### a) Herstellung von Copolymerisat (A)₁:

In einer üblichen Polymerisationsapparatur werden 384 Teile Toluol vorgelegt und auf 110°C aufgeheizt. Dann wird innerhalb von 3 Stunden bei 107 bis 110°C Mischung I, bestehend aus 363 Teilen Methylmethacrylat, 252 Teilen n-Butylacrylat, 35 Teilen Diacetonacrylamid, 50 Teilen Acrylsäure, 4 Teilen tert.-Butylperbenzoat, 4 Teilen tert.-Butylper-2-ethylhexanoat und 40 Teilen Toluol, gleichmäßig zudosiert und noch 2 Stunden bei 110°C nachpolymerisiert.

### b) Herstellung von Copolymerisat (B)₁:

Zu der unter a) beschriebenen Polymerlösung wird im Verlauf einer Stunde bei 107 bis 110°C Mischung II, bestehend aus 177 Teilen Methylmethacrylat 108 Teilen n-Butylacrylat, 15 Teilen Diacetonacrylamid, 1,33 Teilen tert.-Butylperbenzoat, 1,33 Teilen tert.-Butylper-2-ethylhexanoat und 13,3 Teilen Toluol zudosiert. Dann wird noch 3 Stunden bei 110°C nachpolymerisiert und dabei 240 Teile Toluol zugegeben.

### c) Herstellung der wäßrigen Dispersion der Copolymerisate (A)₁ und (B)₁:

In die unter b) beschriebene Polymerlösung rührt man bei 70°C 42,5 Teile 25 %ige wäßrige Ammoniaklösung und dann 1500 Teile Wasser ein. Dann werden unter weiterer Wasserzugabe 1040 Teile eines Toluol-Wasser-Gemisches, unter vermindertem Druck abdestilliert.

Man erhält eine feinteilige Sekundärdispersion mit einem Feststoffgehalt von 32,2 %, einem LD-Wert von 97 und einem Rest-Toluolgehalt von 0,4 Gew.%.

### d) Polymerisation der Monomeren (a) bis (c)

Mischung III, bestehend aus 750 Teilen des unter c) beschriebenen in Wasser dispergierten Copolymerisatgemisches, 90 Teilen Wasser, 1,5 Teilen 25 %iger wäßriger Ammoniaklösung, 133 Teilen Methylmethacrylat, 117 Teilen n-Butylacrylat, 10 Teilen Hexandiol-1,6-diacrylat, 5 Teilen tert.-Butyl-per-2-ethylhexanoat und 2,5 Teilen Benzoesäure, wird auf 80°C aufgeheizt und 4 Stunden bei 80°C gerührt. Man erhält eine stabile Dispersion mit einem Feststoffgehalt von 45,7 % und einem LD-Werts von 88. In die Dispersion werden noch 4,6 Teile Adipinsäuredihydrazid eingerührt.

### Vergleichsversuch 1

Es wird wie in Beispiel 1a verfahren. Das so erhaltene Copolymerisat (A)₁ wird analog Beispiel 1c in Wasser dispergiert. Das in Wasser dispergierte Copolymerisat (A)₁ enthält also nicht die Komponente (B)₁. Das Abdestillieren von Toluol ist im Gegensatz zu Beispiel 1 durch starkes Schäumen sehr erschwert. Die Dispersion hat einen Feststoffgehalt von 28,4 % und den LD-Wert 100.

Die Polymerisation der Monomeren (a) bis (c) wird analog Beispiel 1d durchgeführt, doch gibt man der Monomerenmischung III noch die Monomeren der Mischung II zu. Die entstehende Copolymer-Dispersion hat dann die gleiche Monomerenzusammensetzung und den gleichen Feststoffgehalt wie die Dispersion von Beispiel 1.

Vergleich der Copolymer-Dispersion von Beispiel 1 mit der Copolymer-Dispersion des Vergleichsversuchs 1

| | Dispersion Beispiel 1 | Dispersion Vergleichsversuch 1 |
|---|---|---|
| Feststoffgehalt | 45,7 % | 44,8 % |
| pH-Wert | 7,5 | 7,5 |
| Koagulatgehalt | 0,05 % | 0,3 % |
| LD-Wert | 84 | 82 |
| Viskosität | 250 mPas | 400 mPas |
| Viskosität 35 %ig nach Zusatz von 1 % NH₃ (pH-Wert = 9,0) | 500 mPas | 2100 mPas |
| Pendelhärte des Films (50 µm Filmdicke) nach DIN 53 157 | 74 s | 73 s |
| Aussehen des 50 µm dicken Films | klar, glänzend | etwas matt |
| Wasseraufnahme des Films nach 7 Tagen Wasserlagerung, bezogen auf das Filmgewicht | 6 % | 7 % |

Die Copolymer-Dispersion aus Vergleichsversuch 1 hat also im Vergleich zu der erfindungsgemäß hergestellten Copolymer-Dispersion des Beispiels 1 folgende nachteilige Eigenschaften:
höherer Koagulatgehalt,
höhere Viskosität,
stärkere Abhängigkeit der Viskosität vom pH-Wert
geringerer Glanz des Films,
erhöhte Wasseraufnahme.

### Vergleichsversuch 2

Es wird, wie in Vergleichsversuch 1 verfahren, jedoch wird auf den Zusatz der Ammoniaklösung und der Benzoesäure verzichtet. Nach 4 Stunden Reaktionszeit bei 80°C beträgt der Polymerisationsumsatz (bestimmt aus dem Feststoffgehalt) erst 77 %, und auch nach Zugabe von weiteren 5 Teilen tert.-Butyl-per-2-ethylhexanoat und weiteren 4 Stunden Reaktionszeit bei 80°C ist der Umsatz noch nicht vollständig. Die Dispersion ergibt trübe Filme. Der Koagulatgehalt ist wesentlich höher als bei Vergleichsversuch 1.

### Vergleichsversuch 3

Es wird, wie in Beispiel 1 angegeben, verfahren, jedoch werden die Mischungen I und II zusammen polymerisiert. Man erhält ein Copolymerisat, das die gleiche Monomer-Zusammensetzung hat wie das unter Beispiel 1b angegebene Copolymerisatgemisch, es besteht jedoch nicht aus den Komponenten (A)₁ und (B)₁, sondern ist einheitlich zusammengesetzt.

Beim Dispergieren der erhaltenen Copolymerisat-Lösung in Wasser entsteht eine instabile Dispersion, die bei dem Versuch, das Toluol abzudestillieren, koaguliert.

### Vergleichsversuch 4

Der Vergleichsversuch 1 wurde wiederholt. Es entstand eine Dispersion mit einem Koagulatgehalt von über 2 Gew.%, die einen stark stippigen Film ergibt.

Dieser Versuch zeigt die ungenügende Reproduierbarkeit der Dispersionsherstellung, wenn auf die erfindungsgemäße Komponente B verzichtet wird.

### Beispiel 2

Es wird wie in Beispiel 1d verfahren, jedoch werden statt der 25 Teile Benzoesäure 1,55 Teile Kaliumchlorid vor der Polymerisation der Monomeren (a) bis (c) zugesetzt. Der Feststoffgehalt der dann erhaltenen Copolymer-Dispersion beträgt 45,2 %, der LD-Wert 68.

### Beispiel 3

Es wird eine Mischung hergestellt aus 1500 Teilen des in Beispiel 1c angegebenen Gemisches der Copolymerisate (A)₁ und (B)₁, 180 Teilen Wasser, 3 Teilen 25 %iger wäßriger Ammoniaklösung, 234 Teilen Methylmethacrylat, 234 Teilen n-Butylacrylat, 52 Teilen Styrol, 10 Teilen tert.-Butyl-per-2-ethylhexanoat und 5 Teilen Benzoesäure. 20 % der Mischung werden vorgelegt und auf 80°C erwärmt. Der Rest der Mischung wird unter Rühren im Verlauf von 2 Stunden bei 80°C dem Polymerisationsgemisch zugeführt. Dann wird noch 4 Stunden bei 80°C polymerisiert. Man erhält eine Copolymer-Dispersion mit dem Feststoffgehalt 45,2 % und dem LD-Wert 73.

### Beispiel 4

Es wird wie in Beispiel 1 verfahren, jedoch wird bei der Herstellung der Copolymerisate (A)₁ und (B)₁ statt Diacetonacrylamid die entsprechende Menge n-Butylacrylat eingesetzt. Entsprechend wird zu der fertigen Dispersion kein Adipinsäuredihydrazid zugesetzt.

### Beispiel 5

Man verfährt wie in Beispiel 1 angegeben, setzt jedoch Mischungen I und II folgender Zusammensetzung ein:

### Mischung I:

293 Teile Methylmethacrylat, 245 Teile n-Butylacrylat, 42 Teile Diacetonacrylamid, 50 Teile Acrylsäure, 70 Teile Acrylnitril, 4 Teile tert.-Butylperbenzoat, 4 Teile tert.-Butylper-2-ethylhexanoat, 40 Teile Toluol.

### Mischung II:

147 Teile Methylmethacrylat, 105 Teile n-Butylacrylat, 18 Teile Diacetonacrylamid, 30 Teile Acrylnitril, 2 Teile tert.-Butylperbenzoat, 2 Teile tert.-Butylper-2-ethylhexanoat, 20 Teile Toluol.

### Mischung III:

743 Teile dispergiertes Copolymerisat-Gemisch (A)₅ und (B)₅ (Feststoffgehalt 32,3 %), 90 Teile Wasser, 72 Teile Methylmethacrylat, 72 Teile n-Butylacrylat, 16 Teile Divinylbenzol, 4 Teile tert.-Butylper-2-ethylhexanoat, 2 Teile Benzoesäure, 1,35 Teile 25 %ige wäßrige Ammoniaklösung.

Die fertige Copolymerisat-Dispersion hat den Feststoffgehalt 40,8 % und den LD-Wert 72. Sie wird mit 4,1 Teilen Adipinsäuredihydrazid versetzt.

Die Dispersionen aus den Beispielen 1 bis 5 ergeben beim Trocknen bei Raumtemperatur klare glänzende Filme mit hoher Wasserbeständigkeit. Der Film aus der Dispersion von Beispiel 4 kann mit organischen Lösungsmitteln leicht wieder aufgelöst werden, die übrigen Filme nicht.

## Patentansprüche

1. Verfahren zur Herstellung wäßriger Polymer-Dispersionen durch radikalische Polymerisation von
(a) 50 bis 100 % des gesamten Monomerengewichts C₁-C₂₀-Alkyl(meth)acrylaten,
(b) 0 bis 20 % des gesamten Monomerengewichts polyolefinisch ungesättigten Monomeren und
(c) 0 bis 30 % des gesamten Monomerengewichts weiteren monoolefinisch ungesättigten Monomeren
in wäßriger Emulsion bei Temperaturen von 20 bis 100°C in Gegenwart von vorgebildeten, in Wasser dispergierten Copolymeren, dadurch gekennzeichnet, daß als vorgebildete Copolymere 20 bis 80 Gew.%, bezogen auf die Summe der Gewichte der gesamten Monomeren und der Copolymeren, eines in Wasser dispergierten Gemisches aus 30 bis 90 Gew.% des Gemisches eines in organischen Lösungsmitteln hergestellten Lösungscopolymerisats (A) aus
(I) 1,5 bis 15 % seines Gewicht von Monomeren mit 3 bis 10 Kohlenstoffatomen, die eine Carboxyl- oder Carbonsäureanhydridgruppe enthalten,
(II) 30 bis 98,5 % seines Gewichts C₁-C₂₀-Alkylacrylaten oder -methacrylaten
(III) 0 bis 60 % seines Gewichts Vinylaromaten,
(IV) 0 bis 20 % seines Gewichts monoolefinisch ungesättigten Carbonylverbindungen
(V) 0 bis 20 % seines Gewichts weiteren unter (I) bis (IV) nicht genannten Monomeren
und 10 bis 70 Gew.% des Gemischs eines Lösungscopolymerisats (B) aus 40 bis 100 % seines Gewichts an Monomeren (II) und
0 bis 60 % seines Gewichts an Monomeren (III) bis (V) eingesetzt werden.

2. Verfahren zur Herstellung von Polymerdispersionen nach Anspruch 1, dadurch gekennzeichnet, daß das Gemisch aus den Lösungscopolymerisaten (A) und (B) derart hergestellt ist, daß in einem organischen Lösungsmittel zunächst eine der beiden Komponenten (A) und (B) hergestellt und daran anschließend in der erhaltenen Polymerlösung die andere Komponente hergestellt ist und die die Copolymerisate (A) und (B) enthaltende Lösung unter Zusatz von Ammoniak in Wasser dispergiert und das organische Lösungsmittel dann abdestilliert ist.

3. Verfahren zur Herstellung von wäßrigen Polymer-Dispersionen nach Anspruch 1, dadurch gekennzeichnet, daß zur Initiierung der Polymerisation der Monomeren (a) bis (c) ein in Wasser im wesentlichen nicht löslicher Radikalbildner eingesetzt wird.

4. Verfahren zur Herstellung von wäßrigen Polymer-Dispersionen nach Anspruch 1, dadurch gekennzeichnet, daß dem Polymerisationsmedium 0,5 bis 5 Gew.%, bezogen auf das Gewicht der Lösungspolymerisation (A) und (B) wasserlösliche Salze zugesetzt werden.

## Claims

1. A process for the preparation of an aqueous polymer dispersion by free radical polymerization of
(a) from 50 to 100%, based on the total weight of the monomers, of C₁-C₂₀-alkyl (meth)acrylates,
(b) from 0 to 20%, based on the total weight of the monomers, of polyolefinically unsaturated monomers and
(c) from 0 to 30%, based on the total weight of the monomers, of further monoolefinically unsaturated monomers
in aqueous emulsion at from 20 to 100°C in the presence of preformed copolymers dispersed in water, wherein from 20 to 80% by weight, based on the sum of the weights of all the monomers and of the copolymers, of a mixture, dispersed in water, of from 30 to 90% by weight of the mixture of a solution copolymer (A) prepared in organic solvents and obtained from
(I) 1.5-15%, based on its weight, of monomers of 3 to 10 carbon atoms which contain a carboxyl or carboxylic anhydride group,
(II) 30-98.5%, based on its weight, of C₁-C₂₀-alkyl acrylates or methacrylates,
(III) 0-60%, based on its weight, of vinylaromatics,
(IV) 0-20%, based on its weight, of monoolefinically unsaturated carbonyl compounds and
(V) 0-20%, based on its weight, of further monomers not stated under (I) to (IV)
and from 10 to 70% by weight of the mixture of a solution copolymer (B) obtained from 40-100%, based on its weight, of monomers (II) and
0-60%, based on its weight, of monomers (III) to (V) are used as the preformed copolymers.

2. A process for the preparation of a polymer dispersion as claimed in claim 1, wherein the mixture of the solution copolymers (A) and (B) is prepared by a method in which one of the two components (A) and (B) is first prepared in an organic solvent and the other component is then prepared in the resulting polymer solution, and the solution containing the copolymers (A) and (B) is dispersed in water with the addition of ammonia, and the organic solvent is then distilled off.

3. A process for the preparation of an aqueous polymer dispersion as claimed in claim 1, wherein a free radical initiator which is essentially insoluble in water is used to initiate the polymerization of the monomers (a) to (c).

4. A process for the preparation of an aqueous polymer dispersion as claimed in claim 1, wherein from 0.5 to 5% by weight, based on the weight of the solution polymers (A) and (B), of water-soluble salts are added to the polymerization medium.

## Revendications

1. Procéde de préparation de dispersions aqueuses de polymères par polymérisation radicalaire de
(a) 50 à 100% du poids des monomères totaux de (méth)acrylates d'alkyle en C₁ à C₂₀,
(b) 0 à 20% du poids des monomères totaux de monomères polyoléfiniquement insaturés et
(c) 0 à 30% du poids des monomères totaux d'autres monomères monooléfiniquement insaturés,
en émulsion aqueuse, à des températures de 20 à 100°C, en présence de copolymères formés au prélable, dispersés dans l'eau, caractérisé en ce que, à titre de copolymères formés au préalable, on met en oeuvre 20 à 80% en poids, par rapport à la somme des poids des monomères totaux et des copolymères, d'un mélange dispersé dans l'eau de 30 à 90% en poids du mélange d'un copolymère en solution (A) préparé dans des solvants organiques, constitué de
(I) 1,5 à 15% de son poids de monomères comportant de 3 à 10 atomes de carbone, qui contiennent un radical carboxyle ou anhydride d'acide carboxylique,
(II) 3 à 98,5% de son poids de méthacrylates d'alkyle en C₁ à C₂₀ ou d'acrylates d'alkyle en C₁ à C₂₀,
(III) 0 à 60% de son poids de composés vinylaromatiques,
(IV) O à 20% de son poids de composés carbonylés monooléfiniquement insaturés,
(V) 0 à 20% de son poids d'autres monomères non cités sous (I) à (IV),
et 10 à 70% de son poids d'un mélange d'un copolymère en solution (B), formé de
40 à 100% de son poids de monomères (II) et de
0 à 60% de son poids de monomères (III) à (V).

2. Procédé de préparation de dispersions de polymères suivant la revendication 1, caractérisé en ce que le mélange des copolymères en solution (A) et (B) est préparé en une manière telle que l'on prépare d'abord l'un des deux composants (A) et (B) dans un solvant organique et que l'on prépare ensuite seulement l'autre composant dans la solution de polymère obtenue et on disperse la solution contenant les copolymères (A) et (B) dans de l'eau, sous addition d'ammoniac et on chasse ensuite le solvant organique par distillation.

3. Procédé de préparation de dispersions aqueuses de polymères selon la revendication 1, caractérisé en ce que pour amorcer la polymérisation des monomères (a) à (c) on utilise un agent engendrant des radicaux essentiellement insoluble dans l'eau.

4. Procédé de préparation de dispersions aqueuses de polymères suivant la revendication 1, caractérisé en ce que l'on ajoute de 0,5 à 5% en poids de sels solubles dans l'eau par rapport au poids des polymères en solution (A) et (B).
